Europäisches Patentamt

European Patent Office

Office européen des brevets

(11) Publication number: **0 077 335**
**B1**

## (12) EUROPEAN PATENT SPECIFICATION

(45) Date of publication of patent specification: **02.10.85**

(21) Application number: **82901026.3**

(22) Date of filing: **13.04.82**

(86) International application number:
**PCT/NO82/00020**

(87) International publication number:
**WO 82/03904 11.11.82 Gazette 82/27**

(51) Int. Cl.⁴: **F 17 C 3/02**

(54) AN INSULATION ELEMENT AND A METHOD FOR MANUFACTURING AND A USE OF SAID ELEMENT.

(30) Priority: **28.04.81 NO 811451**

(43) Date of publication of application:
**27.04.83 Bulletin 83/17**

(45) Publication of the grant of the patent:
**02.10.85 Bulletin 85/40**

(84) Designated Contracting States:
**AT BE CH DE FR GB LI LU NL SE**

(56) References cited:
**DE-A-1 500 648**
**FR-A-2 304 509**
**SE-B- 372 330**
**US-A-1 748 575**

(73) Proprietor: **A/S Teknisk Isolering**
**Nedre Storgate 45**
**N-3000 Drammen (NO)**

(72) Inventor:: **EKKER, Emil**
**Bergflotveien**
**N-3400 Lier (NO)**

(74) Representative: **Patentanwälte Dipl.-Ing. Rudolf**
**Bibrach Dipl.-Ing. Elmar Rehberg**
**Pütterweg 6 Postfach 738**
**D-3400 Göttingen (DE)**

Courier Press, Leamington Spa, England.

# Description

The present invention relates to an insulation element, preferably for thermal insulation of tanks for liquified gases or the like, comprising at least a first and a second substantially sheet-formed layer of foam plastic which are attached to a flexible reinforcement layer therebetween, said element at least on one side being coated with a metal foil or the like and being pliable in at least one part to be able to attain a curved form.

Such insulation elements are currently being used in the form of long bars for insulating spherical tanks for LNG. Here, the bars are joined together to a long string which is wound on the tank so as to form two approximate semispherical continuous insulation bodies. The string of insulation elements is on its external side provided with aluminum foil acting as vapour barrier and protecting the insulating material against external damage.

Such spherical tanks, particularly such tanks installed in ships, are often supported by a cylindrical skirt in the equatorial area. Near the transition between sphere and skirt a very narrow space is formed, which is difficult to cover with insulating material. Furthermore, substantial thermally dependent movements will occur at this point because the spherical tank contracts relatively much during cooling while the skirt generally remains at ambient temperature. Therefore, cracks are prone to occur in the insulation near the transition between tank and skirt.

Also for other types of tanks for cold fluids, for instance generally cylindrical, lying tanks on saddle supports, problems will arise due to relative movement between the tank and its surroundings.

The invention aims at providing an insulation element which will facilitate insulating the above-mentioned critical areas and concurrently avoid the danger of crack formation and other reduction of the properties of the insulation. This, according to the invention, is obtained by an insulation element of the type defined above, it being characterized in that the metal foil or the like is only partly fixed to the element, the loose part or parts of the metal foil being located on the areas which after binding form a concave shape.

Thus, one obtains a relatively flexible element which may be bent to curved form and easily brought in place between a spherical tank and its skirt. Furthermore, the element will be able to adapt to thermally dependent movements between the spherical tank and the skirt by means of a corresponding change of its curvature.

According to an advantageous feature of the invention, the metal foil may be fixed to those parts of the element which are essentially straight after bending. The metal foil will provide relatively high stiffness in these parts of the element and thus provide good control of the part or parts of the element to be bent. The final form of the element in installed condition may therefore be more closely determined, thus making is simpler to join such elements side by side to a larger unit.

According to another advantageous feature of the invention, the metal foil may lie double in at least one of the parts which are curved after bending. This will make it easier to bend the element strongly without wrinkling or damaging the metal foil.

It will also be advantageous to let at least the layer of the foam plastic which faces away from the metal foil consist of flexibilized polystyrene. Polystyrene is a material which is very well suited as cryogenic insulation, but which in non-treated condition is too brittle and stiff to be subjected to the bending contemplated by the invention without rupturing.

According to the invention, the two layers of foam plastic material may advantageously be staggered with respect to each other in at least one direction, preferably transversely of the main dimension of the element. When several elements are placed together side by side, this form will provide overlapping between the flexible reinforcement layers of the elements, so that these may be glued to each other and form a continuous reinforcement layer through the elements.

The invention also relates to a method for manufacturing an insulation element, where at least a first and a second layer of foam plastic is attached to a flexible reinforcement layer therebetween and is coated by a metal foil or the like, whereupon the element may be bent to curved form. According to the invention the metal foil is fixed to the respective foam plastic layer substantially only in those parts which are not to be bent. Those parts of the foam plastic to which the metal foil is fixed, become stiff enough as compared to the remaining parts that the element automatically will bend in these remaining parts when it is subjected to a bending moment. Therefore, one obtains good control of the final shape of the element without having to use complicated manufacturing methods or apparatus to effect the bending.

In order to facilitate the installation of the insulation element according to the invention, particularly in the narrow space between a spherical tank and its skirt, the element may advantageously be provided with a permanently curved form by holding it in bent condition during a predetermined time period sufficient to cause permanent deformation of the foam plastic material. Advantageously, in bending at least one of the bendable parts, one can bring the metal foil in this part to overlap, the thus overlapping parts of the foil being interconnected, for example by gluing. It is hereby avoided that the metal foil is clenched and wrinkled to such an extent that it is damaged or will resist bending. In addition, a smooth and appealing surface is maintained, which easily may be inspected for flaws etc.

The invention also relates to the use of an insulation element of the type described above for thermally insulating a tank in the area of its support. Such use of the insulation is particularly advantageous in insulating relatively large tanks for cryogenic liquids due to the great ability of the insulation element to accommodate relative movements without being damaged.

In order that the invention may be more clearly understood, some emodiments will be described by way of examples with reference to the accompanying drawings.

Fig. 1 shows a perspective view of an insulation element according to the invention.

Fig. 2 shows a side view of the element, while Fig. 3 shows the element in plan view as viewed from underneath in Fig. 2.

Fig. 4 shows a perspective view of the element after it has been given a curved form.

Figs. 5 and 6 show the element of Fig. 4 in side view in two different installation conditions.

Fig. 7 shows perspectively a vertical section through a spherical tank having insulation elements according to the invention installed, as in Fig. 6.

Fig. 8 shows at a larger scale a fragment of Fig. 7, but with two rows of insulation elements according to the invention installed.

Fig. 9 shows a vertical section through a lying tank wherein insulation elements according to the invention have been used.

Fig. 10 shows an axial section through a pipe insulation where elements according to the invention are incorporated, while Fig. 11 shows perspectively the insulation elements of Fig. 10 at a somewhat different scale.

Figs. 12—15 show some alternative curvature forms for insulation elements according to the invention.

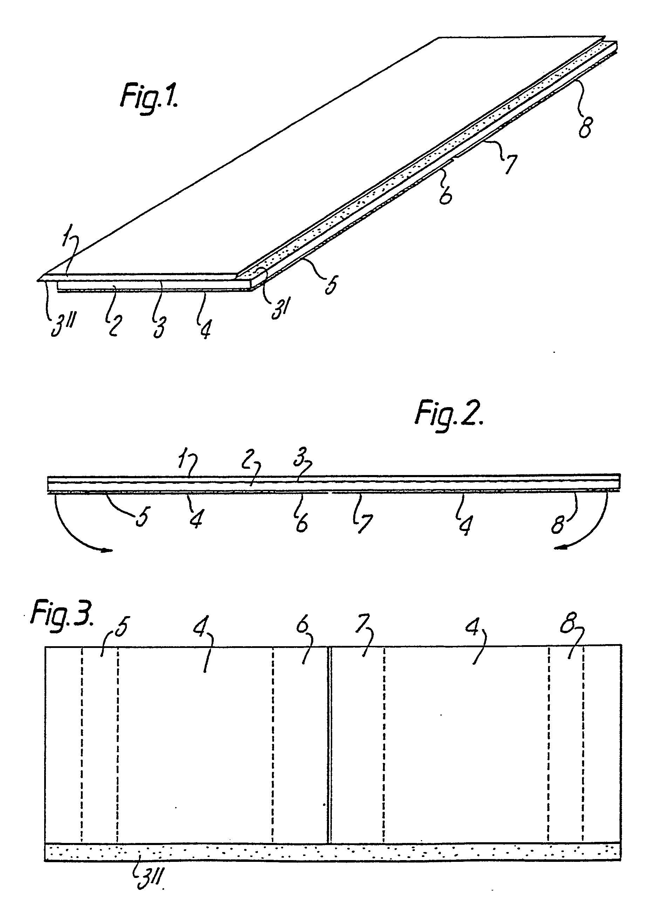

The insulation element shown in Fig. 1 comprises two generally sheet-like layers 1 and 2 of foam plastic, which are glued to a flexible reinforcement layer 3 therebetween. The foam plastic has a closed cell structure and is preferably constituted by polystyrene which has been flexibilized in the longitudinal direction of the element. The foam plastic layer 1 has chamferred longitudinal edges and is shifted somewhat with respect to the foam plastic layer 2, so that the longitudinal edges of the element will have a stepped shape which facilitates overlapping joints between insulation elements placed side by side. It will be seen that the reinforcement layer 3 extends all the way out to the longitudinal edges of the insulation element, so that the exposed parts 3', 3'' may be glued directly to corresponding parts of adjacent insulation elements and thus provide a continuous reinforcement layer through all the elements.

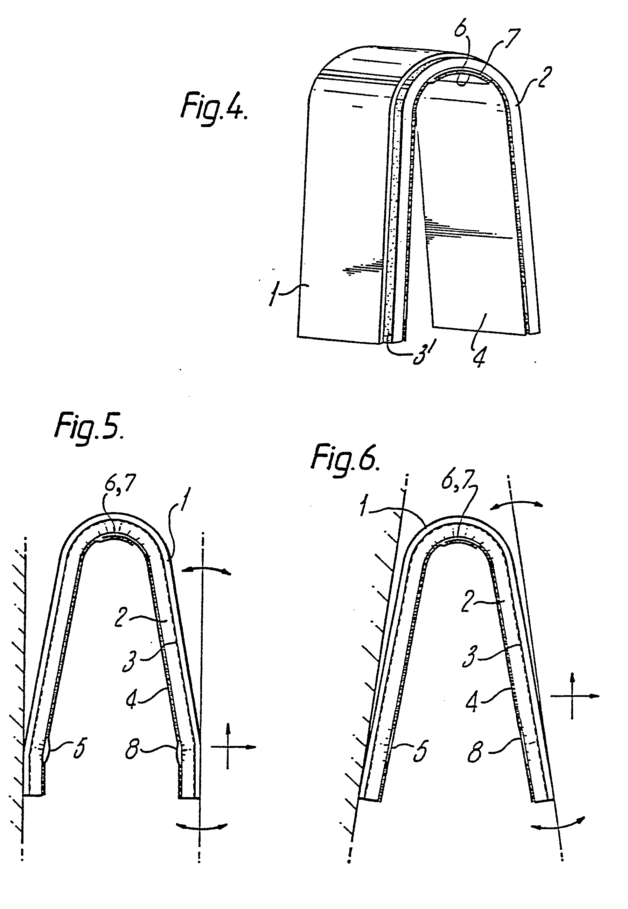

The foam plastic layer 2 is on its outwardly facing side provided with an aluminum foil 4 which is glued to the foam plastic on the major part of its area. As best may be seen from Figs. 2 and 3, the aluminum foil 4 is split in the middle and has four parts 5, 6, 7 and 8, which limits are indicated in broken lines in Fig. 3, which are not glued to the foam plastic layer 2. The parts 6 and 7 thus form loose flaps of the aluminum foil 4.

Fig. 4 shows the insulation element in bent condition. This condition is obtained by gripping the element by its ends, which then are bent towards each other on the aluminum foil side, as indicated with arrows in Fig. 2. By holding the element in bent condition for a suitable period of time, for instance in a jig overnight, the element will be subjected to a permanent deformation and therefore retain its U-shape after being taken out of the jig. During the bending, which mainly has taken place in the middle part where the aluminum foil is not fixed to the foam plastic layer 2, the loose flaps 6, 7 of the aluminum foil have overlapped due to the compression of the foam plastic layer 2. The overlapping parts of the loose flaps 6, 7 are then glued to each other in order for the aluminum foil 4 to form a continuous entity in the finished bent insulation element.

Fig. 5 shows the bent insulation element installed in a space being limited by parallel surfaces. In this case the element is also bent in those places where the parts 5 and 8 of the aluminum foil 4 are not fixed to the foam plastic layer 2. Indeed, the lacking connection between the aluminum foil and the foam plastic makes the element particularly flexible at these points making it bend there rather than at some other point of the legs of the U. The element will be able to accommodate such movements as indicated with arrows in the figure.

Fig. 6 shows the element installed between two surfaces which extend at an angle. Also in this case the arrows indicate the relative movements the element can accommodate.

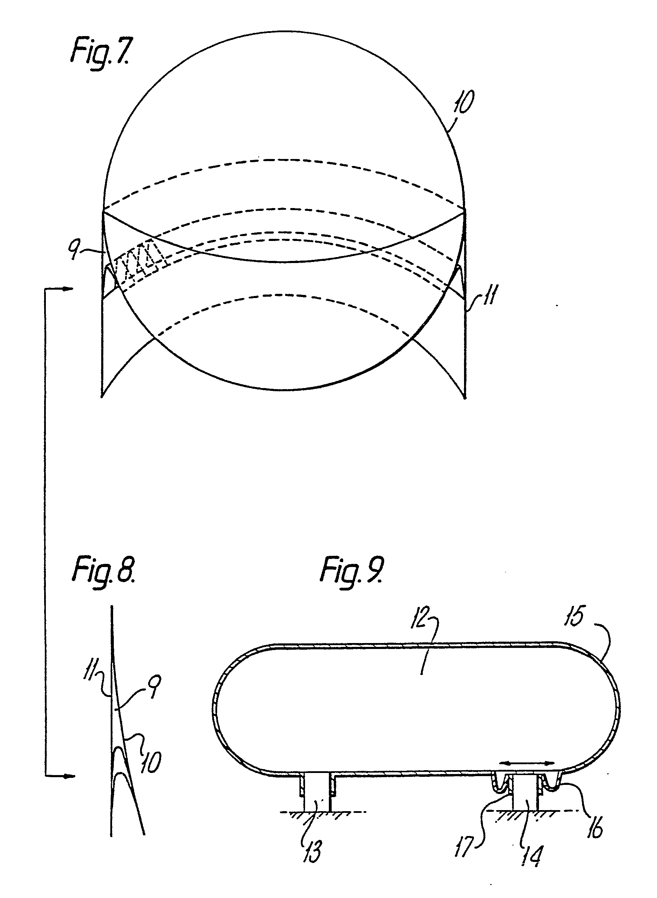

In Fig. 7 is shown how the insulation element according to the invention is installed in the same way as in Fig. 6 in order to close the space 9 between a spherical tank 4 and its supporting skirt 11. Fig. 8 shows how two rows of insulation elements according to the invention may be used in order to provide especially good insulation of this part of the tank structure. It will appear from these figures that in use of insulation elements according to the invention, one does not have to work in the uppermost part of the narrow space 9 between tank and skirt. The invention thus provides substantial simplification and rationalization of the insulation work and concurrently gives a more reliable and effective result.

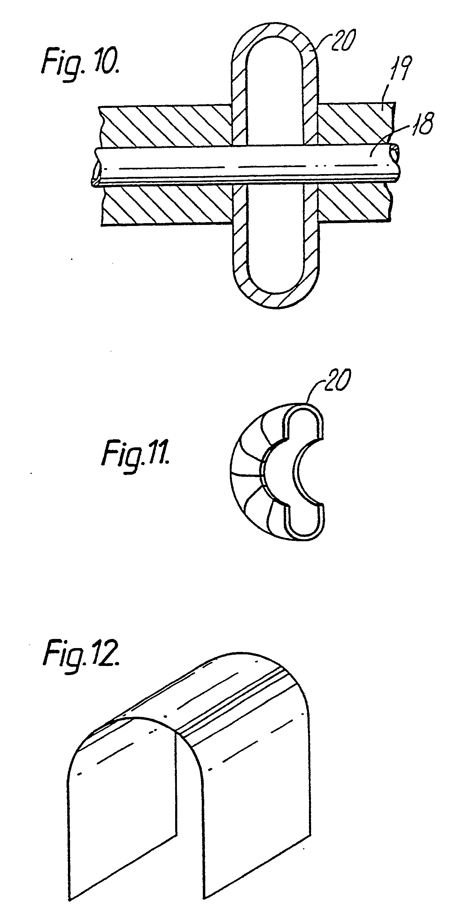

The insulation element according to the invention may advantageously also be used in insulating other types of tanks than spherical tanks. Thus, Fig. 9 shows a generally cylindrical, lying tank 12 resting on fixed supports, for example saddle supports 13 and 14. Due to the thermally dependent movements of the tank with respect to the foundation, the tank is supported slidably on the support 14, as indicated by the arrow. In order that the insulation 15 of the tank is not damaged at the support 14 during such movements, elements 16 according to the invention are installed between the tank insulation 15 and the support insulation 17.

Figs. 10 and 11 show the invention used in insulating pipes where relative movements are to be expected. The pipe is designated 18 and the insulation 19. In the insulation a flexible ring consisting of elements 20 according to the invention is introduced. Fig. 11 shows how the elements 20 may be put together to a half ring which may be joined to a corresponding half ring and closed around the pipe.

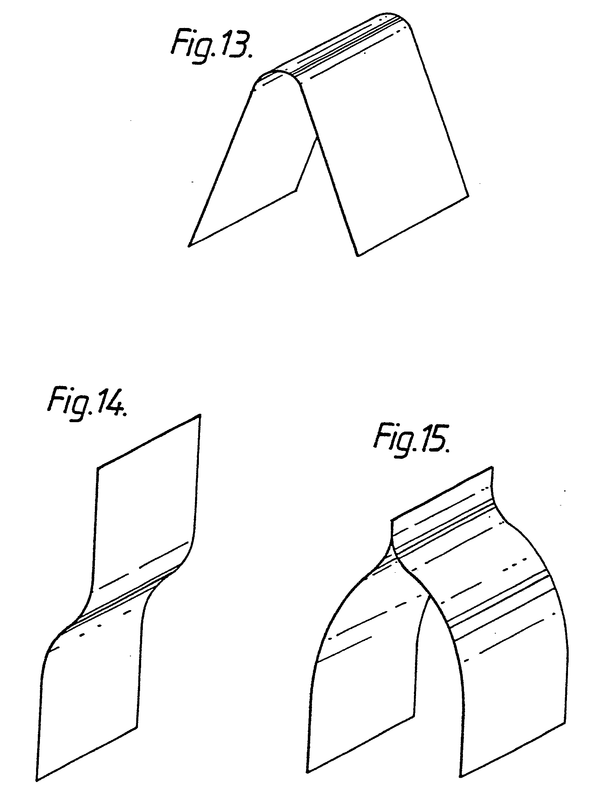

Figs. 12—15 show some different embodiments of the insulation element according to the invention. The embodiments in Figs. 12 and 13 will be particularly advantageous in erecting flexible insulation membranes, for instance for large tanks for cryogenic materials, while one can envisage other appliances of the insulation element where embodiments as in Figs. 14 and 15 will be more suitable.

**Claims**

1. An insulation element, preferably for thermal insulation of tanks for liquified gases or the like, comprising at least a first and a second generally sheetlike layer (1, 2) of foam plastic attached to a flexible reinforcement layer (3) therebetween, said element being at least on one side covered with a metal foil (4) or the like, and being bendable in at least one part so that it can assume a curved form, characterized in that the metal foil or the like (4) is only partly fixed to the element, the loose part or parts (5—8) of the metal foil being located on the areas which after bending form a concave shape.

2. An insulation element according to claim 1, characterized in that the metal foil (4) is fixed to the parts of the element which remain generally straight after bending.

3. An insulation element according to claim 1 or 2, characterized in that the metal foil (4) lies double in at least one of the parts (6, 7) which are curved after bending.

4. An insulation element according to any one of the preceding claims, characterized in that at least the layer (1) of foam plastic which faces away from the metal foil (4) is constituted by flexibilized polystyrene.

5. An insulation element according to any one of the preceding claims, characterized in that the two layers (1, 2) of foam plastic material are shifted with respect to each other in at least one direction, preferably transversely of the main dimension of the element.

6. An insulation element according to any one of the preceding claims, characterized in that the reinforcement layer (3) is extended out to the edges of the element.

7. A method for manufacturing an insulation element where at least a first and a second layer (1, 2) of foam plastic are attached to a flexible reinforcement layer (3) therebetween, and is covered with a metal foil (4) or the like, whereupon the element may be bent to curved form, characterized in that the metal foil (4) is fixedly attached to the respective foam plastic layer (2), substantially on those parts which are not to be bent.

8. A method according to claim 7, characterized in that the element is given a generally permanent curved form by holding it in bent condition in a predetermined time period which is sufficient to provide lasting deformation of the foam plastic material.

9. A method according to claim 7 or 8, characterized in that the metal foil (4) during bending of at least one of the bendable parts, is brought to overlap and the thus overlapping parts (6, 7) of the foil being attached to each other, for instance by gluing.

10. The use of an insulation element according to any one of the preceding claims 1—6, for thermally insulating a tank (10, 12) in the area of a support (11, 14) for the tank.

**Patentansprüche**

1. Ein isolierelement, vorzugsweise zur Wärmeisolierung von Tanks für verflüssigte Gase oder dgl., welches mindestens eine erste und eine zweite Lage (1, 2) aus Schaumstoff aufweist, die an einer zwischen ihnen liegenden flexiblen Verstärkungslage (3) befestigt sind, wobei das Element mindestens auf einer Seite mit einer Metallfolie (4) oder dgl. bedeckt ist und mindestens in einem Teilabschnitt biegsam ist, so daß es eine gekrümmte Form einnehmen kann, dadurch gekennzeichnet, daß die Metallfolie (4) oder dgl. nur teilweise an dem Element befestigt ist und der oder die losen Abschnitte (5—8) der Metallfolie in Abschnitten angeordnet sind, die nach dem Biegen eine konkave Form bilden.

2. Ein Isolierelement nach Anspruch 1, dadurch gekennzeichnet, daß die Metallfolie (4) in den Abschnitten des Elementes befestigt ist, die nach dem Biegen im wesentlichen gerade bleiben.

3. Ein Isolierelement nach Anspruch 1 oder 2, dadurch gekennzeichnet, daß die Metallfolie (4) in mindestens einem der Abschnitte (6, 7), die nach dem Biegen gekrümmt sind, doppelt liegt.

4. Ein Isolierelement nach einem der vorangehenden Ansprüche, dadurch gekennzeichnet, daß mindestens die, der Metallfolie (4) abgekehrte Schaumstofflage (1) aus weich elstischem Polysterol gebildet ist.

5. Ein Isolierelement gemäß einem der vorangehenden Ansprüche, dadurch gekennzeichnet, daß die beiden Schaumstofflagen (1, 2) gegeneinander mindestens in einer Richtung, vorzugsweise quer zur Hauptrichtung des Elementes verschoben sind.

6. Ein Isolierelement nach einem der vorangehenden Ansprüche, dadurch gekennzeichnet, daß sich die Verstärkungslage (3) über die Kanten des Elementes hinaus erstreckt.

7. Verfahren zur Herstellung eines Isolierelementes, bei welchem mindestens eine erste und eine zweite Schaumstofflage (1, 2) an einer dazwischenliegenden Verstärkungslage (3) befestigt und von einer Metallfolie oder dgl. abgedeckt sind, wobei das Element eine gekrümmmte Form einnehmen kann, dadurch gekennzeichnet, daß die Metallfolie (4) an die entsprechende Schaumstofflage (2), im wesentlichen in den Abschnitten befestigt wird, die nicht gebogen werden.

8. Verfahren nach Anspruch 7, dadurch gekennzeichnet, daß das Element in eine dauerhaft gekrümmte Form gebracht wird, in dem es über eine vorherbestimmte Zeitdauer, die ausreicht, eine ständige Verformung des Schaumstoffes zu erzielen, in gekrümmtem Zustand gehalten wird.

9. Verfahren nach Anspruch 7 oder 8, dadurch gekennzeichnet, daß die Metallfolie (4) während des Biegens mindestens eines der zu biegenden Abschnitte zum überlappen gebracht wird und die überlappenden Abschnitte (6, 7) der Folie, beispielsweise durch Kleben aneinander befestigt sind.

10. Die Verwendung eines Isolierelementes nach einem der vorangehenden Ansprüche 1—6 zur Wärmeisolierung eines Tanks (10; 12) im Bereich der Tankstütze (11; 14).

**Revendications**

1. Elément d'isolation, de préférence pour isoler thermiquement des réservoirs de gaz liquéfiés ou l'analogue, comprenant au moins une première couche et une deuxième couche (1, 2) sous forme générale de feuilles de mousse de plastique fixées sur une couche de renforcement souple (3) disposée entre elles, cet élément ayant au moins un côté recouvert d'une feuille métallique (4) ou l'analoque, et pouvant être plié dans au moins une partie de façon à pouvoir prendre une forme courbe, caractérisé en ce que la feuille métallique ou l'analogue (4) est seulement fixée en partie sur l'élément, la ou les parties libres (5—8) de la feuille métallique étant situées dans les surfaces qui, après pliage, prennent une forme concave.

2. Elément d'isolation selon la revendication 1, caractérisé en ce que la feuille métallique (4) est fixée sur les parties de l'élément qui restent généralement rectilignes après pliage.

3. Elément d'isolation selon la revendication 1 ou 2, caractérisé en ce que la feuille métallique (4) est disposée en double dans au moins une des parties (6, 7) qui sont courbées après pliage.

4. Elément d'isolation selon l'une quelconque des revendications précédentes, caractérisé en ce qu'au moins la couche (1) de mousse de plastique qui est disposée de l'autre côté par rapport à la feuille métallique (4) est constituée par du polystyrène rendu flexible.

5. Elément d'isolation selon l'une quelconque des revendications précédentes, caractérisé en ce que les deux couches (1, 2) de mousse de matière plastique sont décalées l'une par rapport à l'autre dans au moins une direction, de préférence transversalement à la dimension principale de l'élément.

6. Elément d'isolation selon l'une quelconque des revendications précédentes, caractérisé en ce que la couche de renforcement (3) s'étend jusqu'aux bords de l'élément.

7. Procédé pour fabriquer un élément d'isolation dans lequel au moins une première couche et une deuxième couche (1, 2) de mousse de plastique sont fixées sur une couche de renforcement souple (3) disposée entre elles et sont recouvertes d'un côté d'une feuille métallique (4) ou l'analogue, d'où il résulte que l'élément peut être plié pour prendre une forme courbe, caractérisé en ce que la feuille métallique (4) est fixée sur la couche de mousse de plastique correspondante (2) pratiquement sur les parties qui n'ont pas à être pliées.

8. Procédé selon la revendication 7, caractérisé en ce qu'on donne à l'élément une forme courbe sensiblement permanente en le maintenant à l'état courbé pendant une durée prédéterminée suffisante pour procurer une déformation durable de la mousse de matière plastique.

9. Procédé selon la revendication 7 ou la revendication 8, caractérisé en ce que la feuille métallique (4) est amenée à se recouvrir lors du pliage d'au moins l'une des parties pliables et que les parties se recouvrant (6, 7) de la feuille sont fixées l'une à l'autre, par exemple par collage.

10. Utilisation de l'élément d'isolation selon l'une des revendications précédentes 1 à 6 pour isoler thermiquement un réservoir (10; 12) dans la zone d'un support (11; 14) du réservoir.

**Fig.1.**

1  3ıı  2  3  4  3ı  5  6  7  8

**Fig.2.**

1  2  3  5  4  6  7  4  8

**Fig.3.**

5  4  6  7  4  8  3ıı

*Fig.4.*

*Fig.5.*

*Fig.6.*

*Fig.7.*

10

9

11

*Fig.8.*

11

9

10

*Fig.9.*

12

15

13

17

14

16

3

Fig. 10.

20

19

18

Fig. 11.

20

Fig. 12.

Fig.13.

Fig.14.

Fig.15.